# EUROPÄISCHE PATENTSCHRIFT

(11) **EP 3 755 507 B1**
(45) Veröffentlichungstag und Bekanntmachung des Hinweises auf die Patenterteilung: **10.05.2023**
(21) Anmeldenummer: 19706266.4
(22) Anmeldetag: 15.02.2019
(51) Int. Cl.: B25J 19/06, B25J 19/00, B25J 17/00

(54) **ROBOTERARM MIT WENIGSTENS EINEM VERFORMUNGSELEMENT**
ROBOT ARM HAVING AT LEAST ONE DEFORMATION ELEMENT
BRAS ROBOTISÉ DOTÉ D'AU MOINS UN ÉLÉMENT DE DÉFORMATION

(30) Priorität: 19.02.2018 DE 102018202459
(43) Veröffentlichungstag der Anmeldung: 30.12.2020
(73) Patentinhaber: KUKA Deutschland GmbH, 86165 Augsburg (DE)
(72) Erfinder: RIEDEL, Martin, 86165 Augsburg (DE)
(74) Vertreter: Oelke, Jochen
(86) Internationale Anmeldenummer: PCT/EP2019/053825
(87) Internationale Veröffentlichungsnummer: WO 2019/158700

(56) Entgegenhaltungen:
- JP-A- 2000 158 378
- JP-A- 2002 307 372
- JP-A- 2010 137 288
- JP-A- 2015 166 117

## Beschreibung

Die Erfindung betrifft einen Roboterarm, aufweisend mehrere Glieder und mehrere Gelenke, welche die Glieder gelenkig miteinander verbinden, wobei die Glieder in Zusammenwirken mit den Gelenken ausgebildet sind, eine Last zu tragen und diese im Raum zu bewegen, wobei die Gelenke mittels Motoren des Roboterarms automatisch verstellbar sind, um die Glieder zu bewegen, wobei von den Gliedern wenigstens ein erstes Glied ein erstes Gehäuse aufweist und ein jeweils benachbartes zweites Glied ein zweites Gehäuse aufweist, wobei die Gehäuse ausgebildet sind, Kräfte und Momente, die aufgrund des Eigengewichts des Roboterarms und/oder der Last auftreten, jeweils an das benachbarte Glied weiterzuleiten, und wobei das wenigstens eine erste Glied und/oder das zweite Glied ein Verformungselement aufweist.

Die US 2017/0080582 A1 beschreibt einen humanoiden Roboter mit Armen und Beinen, die Glieder und Gelenke aufweisen. Die Glieder weisen an gelenksnahen Bereichen flexible Bereiche auf.

Die Druckschrift JP 2015 166117 A offenbart einen Roboterarm gemäß dem Oberbegriff des Anspruchs 1.

Aufgabe der Erfindung ist es, einen Roboterarm zu schaffen, dessen veränderliche Gelenkspalte, die von benachbarten Gliedern eines die Glieder verbindenden und bewegenden Gelenks des Roboterarms gebildet werden, gegen manuelles Eingreifen in die veränderlichen Gelenkspalte abgesichert sind.

Diese Aufgabe wird erfindungsgemäß gelöst durch einen Roboterarm, mit den Merkmalen des Anspruchs 1. Dabei weist der Roboterarm auf:
mehrere Glieder und mehrere Gelenke, welche die Glieder gelenkig miteinander verbinden, wobei die Glieder in Zusammenwirken mit den Gelenken ausgebildet sind, eine Last zu tragen und diese im Raum zu bewegen, und die Gelenke mittels Motoren des Roboterarms automatisch verstellbar sind, um die Glieder zu bewegen,
wobei von den Gliedern wenigstens ein erstes Glied ein erstes Gehäuse aufweist und ein jeweils benachbartes zweites Glied ein zweites Gehäuse aufweist, und die Gehäuse ausgebildet sind, Kräfte und Momente, die aufgrund des Eigengewichts des Roboterarms und/oder der Last auftreten, jeweils an das benachbarte Glied weiterzuleiten,
und wobei das erste Gehäuse des wenigstens einen ersten Glieds und/oder das zweite Gehäuse des zweiten Glieds ein Verformungselement aufweist, das ausgebildet ist, in einem aufgrund einer Verstellung des zugeordneten Gelenks veränderlichen Gelenkspalt zwischen dem ersten Gehäuse und dem zweiten Gehäuse einen den veränderlichen Gelenkspalt zumindest weitgehend oder vollständig ausfüllenden Pufferkörper zu bilden.

Der veränderliche Gelenkspalt, insbesondere der veränderliche Gelenkspaltkeil von dem Pufferkörper kann über einen Spaltraum hinweg zumindest weitgehend oder vollständig ausgefüllt werden, dessen Spaltraumöffnungsweite zwischen dem ersten Gehäuse des ersten Glieds und dem zweiten Gehäuse des zweiten Glieds größer als 5 Millimeter ist.

Ist die Spaltraumöffnungsweite generell kleiner als 5 Millimeter, besteht kein besonderer Bedarf für eine gesonderte Absicherung, da in einem solchen schmalen Spalt ein Eingreifen durch eine Person im Allgemeinen nicht möglich ist. Der Pufferkörper kann ausgebildet sein, den veränderlichen Gelenkspalt, insbesondere den veränderlichen Gelenkspaltkeil oder den Spaltraum so weit auszufüllen, dass eine Restspaltweite zwischen dem ersten Gehäuse des ersten Glieds und dem zweiten Gehäuse des zweiten Glieds von höchstens 5 Millimeter verbleibt.

Ist die Spaltraumöffnungsweite größer als 5 Millimeter, so ist der Spaltraum durch den Pufferkörper abzudecken. Es ist ausreichend, wenn der Pufferkörper den Spaltraum lediglich so weit abdeckt, dass nur mehr ein Restspalt von höchstens 5 Millimeter verbleibt. Dies ist insbesondere sinnvoll, um ein Anstehen oder Anschleifen des Pufferkörpers an dem anderen Glied, das sich relativ zum Pufferkörper bewegen kann, zu verhindern.

< Erfindungsgemäß ist der Pufferkörper an dem wenigstens einen ersten Glied befestigt und dabei ausgebildet, in seiner unverformten Grundgestalt einen Mindestabstand von 1 bis 5 Millimeter zum zweiten Glied einzuhalten.

Alternativ ist der Pufferkörper an dem zweiten Glied befestigt und dabei ausgebildet, in seiner unverformten Grundgestalt einen Mindestabstand von 1 bis 5 Millimeter zum wenigstens einen ersten Glied einzuhalten.

Roboterarme, insbesondere Industrieroboter sind Arbeitsmaschinen, die zur automatischen Handhabung und/oder Bearbeitung von Objekten mit Werkzeugen ausgerüstet werden können, wobei deren Glieder mittels ihrer Gelenke in mehreren Bewegungsachsen beispielsweise hinsichtlich Orientierung, Position und Arbeitsablauf programmierbar sind.

Ein Industrieroboter weist im Allgemeinen den Roboterarm und eine programmierbare Steuerung (Steuervorrichtung) auf, die während des Betriebs die Bewegungsabläufe des Industrieroboters steuert bzw. regelt, dadurch, dass ein oder mehrere automatisch oder manuell verstellbare Gelenke (Roboterachsen) durch insbesondere elektrische Motoren oder Antriebe bewegt werden, in dem die Steuerung die Motoren oder Antriebe steuert bzw. regelt.

Roboterarme können unter anderem ein Gestell und ein relativ zum Gestell mittels eines Gelenks drehbar gelagertes Karussell umfassen, an dem eine Schwinge mittels eines anderen Gelenks schwenkbar gelagert ist. An der Schwinge kann dabei ihrerseits ein Armausleger mittels eines weiteren Gelenks schwenkbar gelagert sein. Der Armausleger trägt dabei eine Roboterhand, wobei insoweit der Armausleger und/oder die Roboterhand mehrere weitere Gelenke aufweisen können.

Der mehrere über Gelenke verbundene Glieder aufweisende Roboterarm kann als ein Knickarmroboter mit mehreren seriell nacheinander angeordneten Gliedern und Gelenken konfiguriert sein, insbesondere kann der Roboterarm als ein Sechsachs-Knickarmroboter oder ein Siebenachs-Knickarmroboter ausgebildet sein. In einer weiteren Ausführungsart kann der Roboterarm ein horizontaler Gelenkarmroboter, d.h. ein SCARA-Roboter sein.

Die vom Roboterarm zu tragende und im Raum zu bewegende Last kann schon durch ein an einem Handflansch des Roboterarms befestigten Werkzeug, wie beispielsweise eines Greifers gebildet werden. Alternativ oder ergänzend zu einem Werkzeug oder Greifer kann die Last jedoch auch durch ein zu handhabendes oder zu bearbeitendes Werkstück gebildet werden. Um solche Lasten halten und bewegen zu können, müssen Kräfte und Momente durch die tragende Struktur des Roboterarms hindurch übertragen werden. Insbesondere zur Bildung eines tragfähigen Armauslegers können deshalb sich axial erstreckende Gehäusekörper mit Hohlräumen ausgeführt sein, bei denen der Gehäusekörper sämtliche Kräfte und Momente der Last aufnehmen und in den Hohlräumen Motoren, Antriebe, Getriebe und Versorgungsleitungen angeordnet sind. Die hohlen Gehäusekörper können insbesondere rohrförmig gestaltet sein.

Jedem Gelenk, das zwei benachbarte Glieder gegeneinander verstellbar verbindet, können jeweils ein Motor oder Antrieb und/oder ein Getriebe zugeordnet sein. Jedes Getriebe dient dazu, eine von dem Motor oder Antrieb eingebrachte Drehzahl bzw. Drehmoment zu übersetzen bzw. zu untersetzen und eine Verstellung des jeweils einen Gliedes bezüglich des benachbarten Gliedes zu ermöglichen.

Der Antrieb kann insbesondere einen elektrischen Motor aufweisen, der einen Rotor mit einer elektrischen Rotorwicklung und einer Antriebswelle aufweist und einen Stator mit einer elektrischen Statorwicklung, die insbesondere in einem Antriebsgehäuse untergebracht sein kann. Der Rotor kann insbesondere dadurch mit einem Eingangsglied des Getriebes verbunden sein, indem die Antriebswelle, insbesondere eine Hohlwelle des Antriebs mit einer hohlen Getriebewelle des Getriebes verbunden, oder sogar einteilig mit diesem als eine gemeinsame Hohlwelle ausgebildet ist.

Indem das erste Gehäuse des wenigstens einen ersten Glieds und/oder das zweite Gehäuse des zweiten Glieds ein Verformungselement aufweist, das ausgebildet ist, in einem aufgrund einer Verstellung des zugeordneten Gelenks veränderlichen Gelenkspalt zwischen dem ersten Gehäuse und dem zweiten Gehäuse einen den veränderlichen Gelenkspalt zumindest weitgehend oder vollständig ausfüllenden Pufferkörper zu bilden, ist der jeweils betreffende veränderliche Gelenkspalt gegen manuelles Eingreifen abgesichert.

Der Pufferkörper ist demgemäß ausgebildet, den Gelenkspalt derart auszufüllen, dass eine Person - ob unbeabsichtigt oder beabsichtigt - erst gar nicht in den Gelenkspalt eingreifen kann. Indem der Pufferkörper, in Anbetracht der jeweiligen äußeren Konturgestalt der Glieder, insoweit innerhalb des Gelenkspalts oder den Gelenkspalt überdeckend angeordnet ist, wird ein zum Einklemmen gefährdeter Bereich des Roboterarms beseitigt. Aufgrund der Verformbarkeit des Pufferkörpers und seiner äußeren angepassten Gestalt, kann sich der Pufferkörper an die geometrische Veränderlichkeit des Gelenkspalts anpassen.

Das dem wenigstens einen ersten Glied und dem zweiten Glied zugeordnete Gelenk kann ein Drehgelenk sein, das ausgebildet ist, das erste Glied und das zweite Glied in einer scherenartigen Bewegung gegeneinander zu bewegen, unter Bildung eines veränderliche Gelenkspaltkeils, wobei der von dem Pufferkörper auszufüllende veränderliche Gelenkspaltkeil durch das erste Gehäuse des ersten Glieds und das zweite Gehäuse des zweiten Glieds begrenzt wird.

Der veränderliche Gelenkspaltkeil kann sich insoweit dadurch ergeben, dass ein Glied des Roboterarms an seinem zugeordneten Gelenk gegen das jeweils benachbarte Glied des Roboterarms bewegt, d.h. verstellt wird.

Der Pufferkörper kann wenigstens einen starren Gerüstkörper aufweisen, der am Pufferkörper relativ zum ersten Gehäuse des ersten Glieds und relativ zum zweiten Gehäuse des zweiten Glieds beweglich gelagert ist und mit wenigstens einem Federkörper des Pufferkörpers verbunden ist, der ausgebildet ist, den wenigstens einen starren Gerüstkörper in einem von äußeren Kräften freien Zustand in eine Grundstellung zu positionieren.

Der Pufferkörper kann vollständig aus einem elastischen Formkörper bestehen, der ausgebildet ist, aufgrund seiner immanenten Elastizität den Pufferkörper in einem von äußeren Kräften freien Zustand in seine unverformte Grundgestalt zu bringen.

Der elastische Formkörper kann ausgebildet sein, aufgrund seiner Kompression zwischen dem ersten Gehäuse des ersten Glieds und dem zweiten Gehäuse des zweiten Glieds, im Vergleich zu seiner unverformten Grundgestalt sich aus dem Gelenkspalt, insbesondere aus dem Gelenkspaltkeil hervorzuwölben.

Je nach Ausprägungsform des verformbaren Bereichs des elastischen Formkörpers und/oder der Schutzlippe, wird diese bei Kompression durch das andere Glied bzw. zwischen zwei Gliedern nach außen gedrückt, so dass es sich hervorwölbt. Hierdurch wird zusätzlich die Quetschgefahr reduziert, da aufliegende oder sich in der Nähe befindliche Körperteile, wie bspw. Hände oder Finger, zusätzlich nach außen geschoben werden, d.h. aus dem Bereich des veränderlichen Gelenkspalts durch die Vorwölbung des elastischen Formkörpers und/oder der Schutzlippe weggedrückt werden.

Der Formkörper kann in der durch die Relativbewegung von erstem Gehäuse des ersten Glieds zu dem zweiten Gehäuse des zweiten Glieds vorgegebenen Bewegungsrichtung eine geringere Steifigkeit und/oder höhere Elastizität aufweisen, und in einer zur vorgegebenen Bewegungsrichtung quer verlaufenden Querrichtung eine höhere Steifigkeit und/oder geringere Elastizität aufweisen.

Das wenigstens eine erste Glied, das zweite Glied und/oder der Formkörper kann einen Sensor aufweisen, der ausgebildet ist, den zwischen dem ersten Gehäuse des ersten Glieds und dem zweiten Gehäuse des zweiten Glieds vorhandenen Gelenkspalt, insbesondere den Gelenkspaltkeil in seiner Spaltweite zu erfassen.

Der Formkörper kann mit einer Bewegungsvorrichtung ausgestattet sein, die ausgebildet ist, den Formkörper aktiv aus seiner Grundgestalt in eine von der Grundgestalt abweichende Verformungsgestalt zu bewegen.

Zusammenfassend erläutert kann die Erfindung in einem zweistufigen Wirkprinzip aufbauen, welcher rein passiv ausgeführt werden kann oder in Varianten zusätzlich Sensoren aufweisen kann.

In einer ersten Stufe oder Phase kann vorgesehen sein, dass sich das Gelenk in einem normalen Bereich, d.h. fern der Bereichsgrenzen des jeweiligen Gelenks, bewegt. Dieser normale Bereich macht im Allgemeinen den größten Teil der Gelenkbeweglichkeit aus. Er umfasst ca. 70-90% aller Bewegungen. Hierbei besteht die Hauptgefahr eines Einziehens. Ein mit dem betreffenden Glied verbundener, speziell geformter Pufferkörper kann so positioniert sein, dass der Pufferkörper das betreffende Glied in dieser ersten Stufe oder Phase nicht berührt und einen schmalen Spalt, insbesondere einen Spalt kleiner gleich 5 Millimeter zur (teils-)zylindrischen Mantelfläche ausbildet.

Der Pufferkörper kann dabei in Gelenkbewegungsrichtung nachgiebig und in einer zur Gelenkbewegungsrichtung quer verlaufenden Richtung möglichst steif bzw. unnachgiebig aufgebaut sein. Es können entweder einzelne Bereiche nachgiebig aufgeführt sein oder dar gesamte Pufferkörper in Form einer elastischen, insbesondere gummiartigen Lippe aufgebaut sein. Bei einer elastischen Lippe können insbesondere die Kombination aus tendenziell steifen Elementen in der zur Gelenkbewegungsrichtung quer verlaufenden Richtung, z.B. ausgeprägte Rippen oder harte Lamellen, und in Gelenkbewegungsrichtung weichen Elementen, z.B. Elastomer oder Hohlräume, die gewünschte Charakteristik der Nachgiebigkeit erzeugen. Der Pufferkörper kann somit vor versehentlichem Einzug schützen, da der Spalt jederzeit ausreichend eng ist und die Außenfläche durch die radiale Steifigkeit eine abweisende Wirkung besitzt. Eine Ausprägungsform als Kombination von elastischen Elementen, z.B. Blattfeder, und einer harten aber beweglichen Blende, sind ebenfalls möglich. Unter einem versehentlichen Einzug kann insbesondere verstanden werden, dass Gegenstände, wie beispielsweise Kleidungsstücke, Haare, Papiere oder Finger eines Menschen, die unbeabsichtigt in den Bereich des veränderlichen Spaltes gelangen, aufgrund der relativen Bewegung der benachbarten Glieder des betreffenden Gelenks, in den veränderlichen Spalt hineingezogen werden.

Die durch den Pufferkörper gebildete Schutzlippe kann je nach geometrischer Ausprägung der Gelenkstelle beispielsweise als abgelängtes Endlosprofil massentauglich und sehr kostengünstig hergestellt werden.

Bewegt sich das Gelenk in einer zweiten Stufe oder Phase in seine Grenzbereiche, so wird es durch das in Gelenkbewegungsrichtung nachgiebige Schutzelement, d.h. den Pufferkörper nicht in seiner Beweglichkeit beschränkt. Das zugeordnete Glied berührt in dieser zweiten Phase insbesondere einen oberen Lippenbereich, vorzugsweise linienförmig, und drückt diesen in Richtung Glied. Durch die räumliche Nähe der Lippenkante zur Drehachse kann die Verformung sehr einfach und ohne zusätzliches Motormoment oder zusätzlichem Aktuator erzeugt werden. Dabei kann sogar davon ausgegangen werden, dass die zusätzlichen Momente im Bereich der Messgenauigkeit eines ggf. vorhandenen Roboter internen Gelenkmomentsensors liegen und diesen somit nicht beeinflussen. Die Relativbewegung der Lippenkante bezüglich des anderen Glieds ist im Kontaktzustand geometrisch bedingt sehr gering, wodurch ein Verschleiß reduziert werden kann.

Je nach Ausprägungsform des verformbaren Bereichs der Schutzlippe, wird diese bei Kompression durch das andere Glied nach außen gedrückt. Hierdurch wird zusätzlich die Quetschgefahr reduziert, da aufliegende Körperteile, wie bspw. Hände, nach außen geschoben werden.

Die reine Schutzfunktion durch Abweisen, Abhalten und/oder Herausschieben kann insbesondere rein passiv erreicht werden. Sie gewährleistet, dass es zu keinem unabsichtlichen Einziehen oder Klemmen kommen kann. Möchte man zudem noch eine Fehlbenutzung ausschließen, kann diese beispielsweise über einen Sensor mit überwacht werden. Dazu kann in einer Ausprägungsform beispielsweise ein Sensor den Spalt dadurch überwachen, dass eine Lichtschranke in Spaltlängsrichtung, d.h. Gelenkaxialrichtung, integriert wird. Durch Vergleich mit einer sicheren Positionserfassung der Gelenkstellung kann auch in sicherer Technik detektiert werden, ob die Schutzlippe durch einen externen Vorgang, wie ein vorsätzliches Manipulieren durch eine Person, heruntergebogen wird und nicht systembedingt beispielsweise durch das andere Glied heruntergedrückt wurde.

Eine einfache Kontaktleiste, die auf der Lippe aufgesetzt oder integriert sein kann, ermöglicht ebenfalls eine solche Überwachung.

Soll die Schutzlippe nicht von der Außenfläche des anderen Gliedes heruntergedrückt werden, sondern berührungslos zurückweichen, sind auch Ausprägungsformen möglich, in denen intern, d.h. beispielsweise unterhalb der Strukturverkleidung die Lippe bewegt wird, z.B. über eine Art Kulissenführung oder Kurvenelemente.

Mit den erfindungsgemäßen Ausführungen können somit Klemm- und Einzugsstellen bei Robotern insbesondere bei engem Gelenkaufbau (Gabelaufbau, geringe oder keine Schichtung), geschützt werden und trotzdem eine gute Beweglichkeit in den Gelenken beibehalten werden. Die Ausführungsformen zum Schutz sind zumindest überwiegen oder rein passiv und sehr kostengünstig aufgebaut und können eine Basis bilden, um Roboter mit Gelenken im Gabelaufbau für Anwendung im Bereich der Mensch-Roboter-Kollaboration sicher realisieren zu können.

Konkrete Ausführungsbeispiele der Erfindung sind in der nachfolgenden Figurenbeschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder auch in anderen Kombinationen der Merkmale betrachtet, allgemeine Merkmale der Erfindung darstellen.

Die Figuren zeigen:
- Fig. 1: einen beispielhaften Industrieroboter mit einem Roboterarm und einer Robotersteuerung,
- Fig. 2: eine schematische Darstellung eines beispielhaften Gelenks eines Roboterarms, mit einem ersten Glied, einem zweiten Glied und einem erfindungsgemäßen Pufferkörper in einer Grundstellung,
- Fig. 3: eine schematische Darstellung des Gelenks gemäß Fig. 2 mit dem Pufferkörper in einer Gelenkstellung im Normalbereich,
- Fig. 4: eine schematische Darstellung des Gelenks gemäß Fig. 2 mit dem Pufferkörper in einer Gelenkstellung im Grenzbereich,
- Fig. 5: eine schematische Darstellung des Gelenks gemäß Fig. 2 mit einer Andeutung von Bereichen mit hoher und niedriger Steifigkeit,
- Fig. 6: eine schematische Darstellung des Gelenks gemäß Fig. 2 mit einem Pufferkörper, der Hohlräume aufweist,
- Fig. 7: eine schematische Darstellung des Gelenks gemäß Fig. 2 mit einem Pufferkörper, der starre Gerüstkörper und flexible Verkleidungen aufweist,
- Fig. 8: eine schematische Darstellung des Gelenks gemäß Fig. 2 mit einem Pufferkörper, der einen verstellbaren, starren Gerüstkörper aufweist,
- Fig. 9: eine schematische Darstellung des Gelenks gemäß Fig. 2 mit einem Pufferkörper, der mit einem Sensor in Form einer Lichtschranke versehen ist,
- Fig. 10: eine schematische Darstellung des Gelenks gemäß Fig. 2 mit einem Pufferkörper, der mit einem außen angeordneten Sensor versehen ist, und
- Fig. 11: eine schematische Darstellung des Gelenks gemäß Fig. 2 mit einem Pufferkörper, der mit einem innerhalb des Pufferkörpers angeordneten Sensor versehen ist.

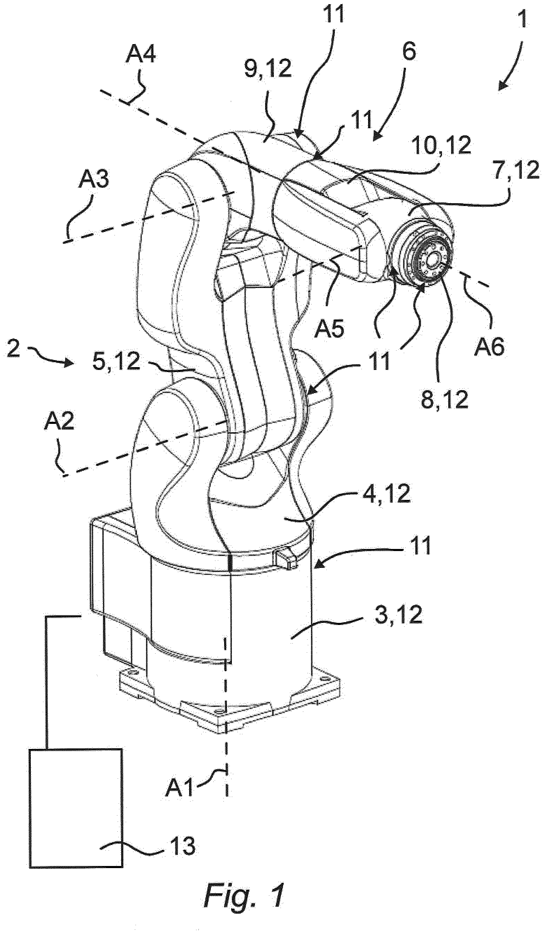

Die Fig. 1 zeigt einen Roboter 1, der einen Roboterarm 2 und eine Robotersteuerung 13 aufweist. Der Roboterarm 2 umfasst im Falle des vorliegenden Ausführungsbeispiels mehrere, nacheinander angeordnete und mittels Gelenke 11 verbundene Glieder 12. Bei den Gliedern 12 handelt es sich insbesondere um ein Grundgestell 3 und ein relativ zum Gestell 3 um eine vertikal verlaufende Drehachse A1 drehbar gelagertes Karussell 4. Die Schwinge 5 ist am unteren Ende z.B. an einem nicht näher dargestellten Schwingenlagerkopf auf dem Karussell 4 um eine vorzugsweise horizontale Drehachse A2 schwenkbar gelagert. Am oberen Ende der Schwinge 5 ist wiederum um eine ebenfalls vorzugsweise horizontale Drehachse A3 der Armausleger 6 schwenkbar gelagert.

Dieser trägt endseitig die Roboterhand 7 mit ihren vorzugsweise drei Drehachsen A4, A5, A6. Der Armausleger 6 weist im Falle des vorliegenden Ausführungsbeispiels einen schwenkbar an der Schwinge 5 gelagerten Grundarm 9 auf. An dem Grundarm 9 ist ein Vorderarm 10 des Armauslegers 6 um die Drehachse A4 drehbar gelagert. Weitere Glieder des Roboterarms 2 sind im Falle des vorliegenden Ausführungsbeispiels neben dem Grundgestell 3, dem Karussell 4, der Schwinge 5 und dem Grundarm 9, außerdem die Glieder 12 der vorzugsweise mehrachsigen Roboterhand 7 mit einer als Anschlussflansch 8 ausgeführten Befestigungsvorrichtung zum Befestigen eines nicht dargestellten Endeffektors, wie beispielsweise eines Werkzeugs oder eines Greifers.

Der Roboterarm 2 weist im Falle des vorliegenden Ausführungsbeispiels demgemäß ein Grundgestell 3 auf, ein am Grundgestell 3 mittels eines ersten Gelenks 11 des Roboterarms 2 um eine erste Drehachse A1 drehbar gelagertes Karussell 4, eine am Karussell 4 mittels eines zweiten Gelenks 11 des Roboterarms 2 um eine zweite Drehachse A2 schwenkbar gelagerte Schwinge 5, einen an der Schwinge 5 mittels eines dritten Gelenks 11 des Roboterarms 2 um eine dritte Drehachse A3 drehbar gelagerten Grundarm 9, und eine am Grundarm 9 gelagerte, mehrachsige Roboterhand 7.

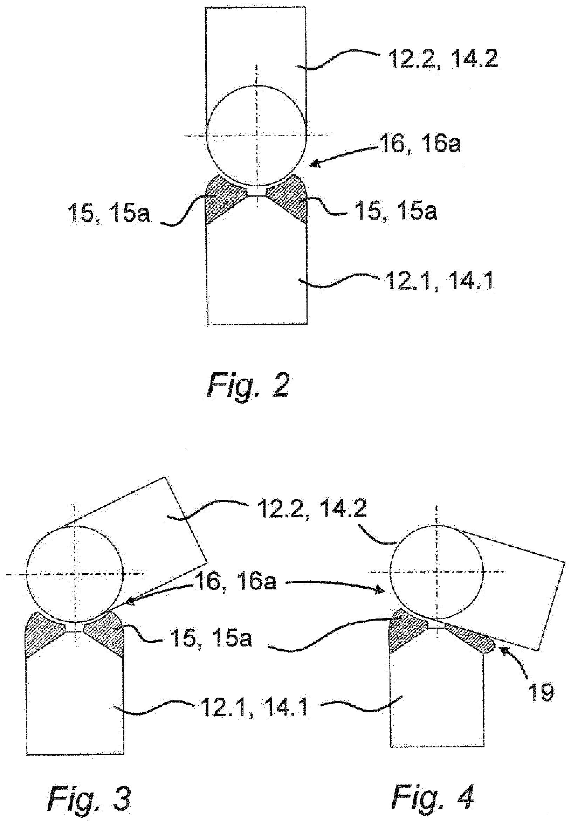

Von den Gliedern 12 ist, wie in Fig. 2 bis Fig. 11 dargestellt ein repräsentatives erstes Glied 12.1 gezeigt, das ein erstes Gehäuse 14.1 aufweist und ein repräsentatives benachbartes zweite Glied 12.2 gezeigt, das ein zweites Gehäuse 14.2 aufweist. Die Gehäuse 14.1, 14.2 sind ausgebildet, Kräfte und Momente, die aufgrund des Eigengewichts des Roboterarms 2 und/oder der Last auftreten, jeweils an das benachbarte Glied 12.1, 12.2 weiterzuleiten.

Das erste Gehäuse 14.1 des wenigstens einen ersten Glieds 12.1 weist im Falle des vorliegenden Ausführungsbeispiels ein Verformungselement 15a auf, das ausgebildet ist, in einem aufgrund einer Verstellung des zugeordneten zweiten Gelenks 12.2 veränderlichen Gelenkspalt 16 zwischen dem ersten Gehäuse 14.1 und dem zweiten Gehäuse 14.2 einen den veränderlichen Gelenkspalt 16 zumindest weitgehend oder vollständig ausfüllenden Pufferkörper 15 zu bilden.

In den Fällen der vorliegenden Ausführungsbeispiele sind die jeweiligen, dem ersten Glied 12.1 und dem zweiten Glied 12.2 zugeordnete Gelenk 11 als Drehgelenke gestaltet, die jeweils ausgebildet sind, das erste Glied 12.1 und das zweite Glied 12.2 in einer scherenartigen Bewegung gegeneinander zu bewegen, unter Bildung eines veränderliche Gelenkspaltkeils 16a, wobei der von dem Pufferkörper 15 auszufüllende veränderliche Gelenkspaltkeil 16a durch das erste Gehäuse 14.1 des ersten Glieds 12.1 und das zweite Gehäuse 14.2 des zweiten Glieds 12.2 begrenzt wird.

Der veränderliche Gelenkspalt 16, insbesondere der veränderliche Gelenkspaltkeil 16a ist von dem Pufferkörper 15 über einen Spaltraum hinweg zumindest weitgehend oder vollständig ausgefüllt, dessen Spaltraumöffnungsweite zwischen dem ersten Gehäuse 14.1 des ersten Glieds 12.1 und dem zweiten Gehäuse 14.2 des zweiten Glieds 12.1 größer als 5 Millimeter ist.

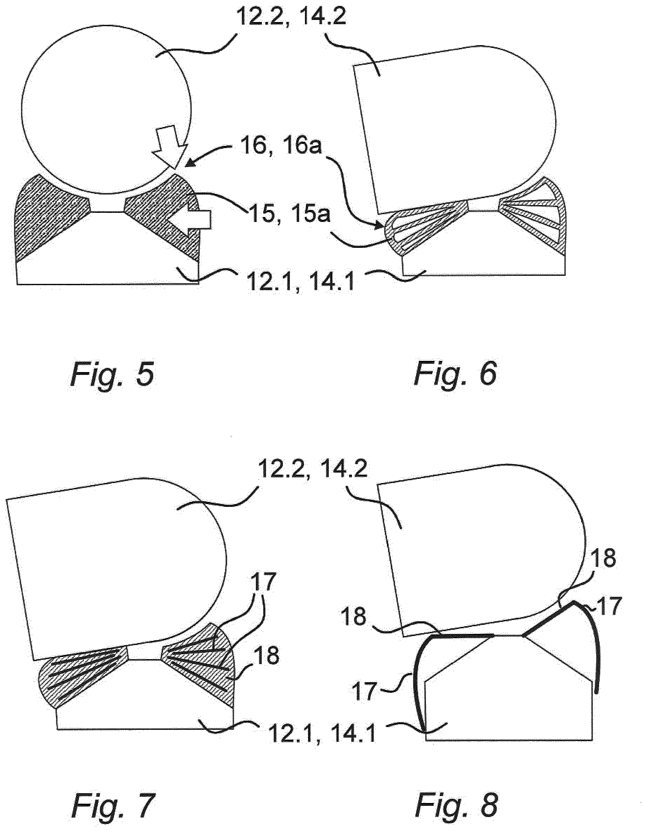

Der Pufferkörper 15 weist gemäß Fig. 7 und Fig. 8 wenigstens einen starren Gerüstkörper 17 auf, der am Pufferkörper 15 relativ zum ersten Gehäuse 14.1 des ersten Glieds 12.1 und relativ zum zweiten Gehäuse 14.2 des zweiten Glieds 12.2 beweglich gelagert ist und mit wenigstens einem Federkörper 18 des Pufferkörpers 15 verbunden ist, der ausgebildet ist, den wenigstens einen starren Gerüstkörper 17 in einem von äußeren Kräften freien Zustand in eine Grundstellung zu positionieren. Im Falle der Ausführungsvariante gemäß Fig. 7 wird der starre Gerüstkörper 17 von mehreren Ziehharmonikaartigen Rippen gebildet, die von einer elastomeren Schicht umhüllt sind. Die elastomere Schicht bildet dabei einen äußeren mantelartigen Federkörper 18, der gleichzeitig eine Außenhaut des Pufferkörpers 15 bildet. Im Falle der Ausführungsvariante gemäß Fig. 8 wird der starre Gerüstkörper 17 schürzenartigen Mantelflächen gebildet, die an separaten Hebeln befestigt sind. Die schürzenartigen Mantelflächen sind dabei an freien Enden der Hebel befestigt. Die separaten Hebel können immanent oder separate Federmittel umfassen, welche einen Federkörper 18 bilden, um die separaten Hebel zu bewegen und dadurch die schürzenartigen Mantelflächen in ihre Grundstellungen zu bringen.

Gemäß den Ausführungen nach Fig. 5 und Fig. 6 hingegen, ist der Pufferkörper 15 vollständig aus einem elastischen Formkörper hergestellt, der ausgebildet ist, aufgrund seiner immanenten Elastizität den Pufferkörper 15 in einem von äußeren Kräften freien Zustand in seine unverformte Grundgestalt zu bringen. Dazu kann der elastische Pufferkörper 15 beispielsweise Luftkammern aufweisen. Mehrere Luftkammern können durch sich radial erstreckende Streben getrennt sein. Die Streben können insbesondere einteilig durch das elastische Material des elastischen Pufferkörpers 15 gebildet werden.

Wie insbesondere in Fig. 4 angedeutet ist, kann der elastische Formkörper 15 ausgebildet ist, aufgrund seiner Kompression zwischen dem ersten Gehäuse 14.1 des ersten Glieds 12.1 und dem zweiten Gehäuse 14.2 des zweiten Glieds 12.2, im Vergleich zu seiner unverformten Grundgestalt (siehe Fig. 2 oder Fig. 3) sich aus dem Gelenkspalt 16, insbesondere aus dem Gelenkspaltkeil 16a hervorzuwölben, wie dies durch das Bezugszeichen 19 in Fig. 4 aufgezeigt ist.

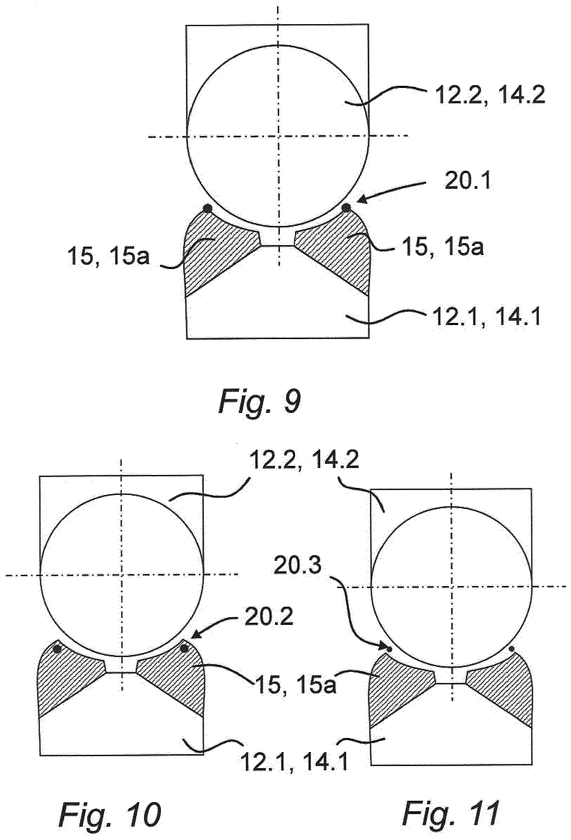

Die Fig. 9 bis Fig. 11 zeigen, wie das erste Glied 12.1, das zweite Glied 12.2 und/oder der Formkörper 15 wenigstens einen Sensor 20.1, 20.2, 20.3 aufweist, der ausgebildet ist, den zwischen dem ersten Gehäuse 14.1 des ersten Glieds 12.1 und dem zweiten Gehäuse 14.2 des zweiten Glieds 12.2 vorhandenen Gelenkspalt 16, insbesondere den Gelenkspaltkeil 16a in seiner Spaltweite zu erfassen.

In Fig. 9 ist der wenigstens eine Sensor 20.1 als eine im Gelenkspalt 16, insbesondere im Gelenkspaltkeil 16a wirkende Lichtschranke ausgebildet. In Fig. 10 ist der wenigstens eine Sensor 20.2 als ein an der äußeren Oberfläche des Formkörpers 15 angeordneter Sensor 20.2 ausgebildet. In Fig. 11 ist der wenigstens eine Sensor 20.3 als ein im Inneren des Formkörpers 15 angeordneter Sensor 20.2 ausgebildet.

## Patentansprüche

1. Roboterarm, aufweisend:
mehrere Glieder (12) und mehrere Gelenke (11), welche die Glieder (12) gelenkig miteinander verbinden, wobei die Glieder (12) in Zusammenwirken mit den Gelenken (11) ausgebildet sind, eine Last zu tragen und diese im Raum zu bewegen, und die Gelenke (11) mittels Motoren des Roboterarms (2) automatisch verstellbar sind, um die Glieder (12) zu bewegen,
wobei von den Gliedern (12) wenigstens ein erstes Glied (12.1) ein erstes Gehäuse (14.1) aufweist und ein jeweils benachbartes zweites Glied (12.2) ein zweites Gehäuse (14.2) aufweist, und die Gehäuse (14.1, 14.2) ausgebildet sind, Kräfte und Momente, die aufgrund des Eigengewichts des Roboterarms (2) und/oder der Last auftreten, jeweils an das benachbarte Glied (12.1, 12.2) weiterzuleiten,
und wobei das erste Gehäuse (14.1) des wenigstens einen ersten Glieds (12.1) und/oder das zweite Gehäuse (14.2) des zweiten Glieds (12.2) ein Verformungselement (15a) aufweist,
wobei das Verformungselement (15a) ausgebildet ist, in einem aufgrund einer Verstellung des zugeordneten Gelenks (11) veränderlichen Gelenkspalt (16) zwischen dem ersten Gehäuse (14.1) und dem zweiten Gehäuse (14.2) einen den veränderlichen Gelenkspalt (16) zumindest weitgehend oder vollständig ausfüllenden Pufferkörper (15) zu bilden,
**dadurch gekennzeichnet, dass** der Pufferkörper (15) an dem wenigstens einen ersten Glied (12.1) befestigt ist und ausgebildet ist, in seiner unverformten Grundgestalt einen Mindestabstand von 1 bis 5 Millimeter zum zweiten Glied (12.2) einzuhalten oder
**dadurch gekennzeichnet, dass** der Pufferkörper (15) an dem zweiten Glied (12.2) befestigt ist und ausgebildet ist, in seiner unverformten Grundgestalt einen Mindestabstand von 1 bis 5 Millimeter zum wenigstens einen ersten Glied (12.1) einzuhalten.

2. Roboterarm nach Anspruch 1, wobei das dem wenigstens einen ersten Glied (12.1) und dem zweiten Glied (12.2) zugeordnete Gelenk (11) ein Drehgelenk ist, das ausgebildet ist, das erste Glied (12.1) und das zweite Glied (12.2) in einer scherenartigen Bewegung gegeneinander zu bewegen, unter Bildung eines veränderliche Gelenkspaltkeils (16a), wobei der von dem Pufferkörper (15) auszufüllende veränderliche Gelenkspaltkeil (16a) durch das erste Gehäuse (14.1) des ersten Glieds (12.1) und das zweite Gehäuse (14.2) des zweiten Glieds (12.2) begrenzt wird.

3. Roboterarm nach Anspruch 1 oder 2, wobei der veränderliche Gelenkspalt (16), insbesondere der veränderliche Gelenkspaltkeil (16a) von dem Pufferkörper (15) über einen Spaltraum hinweg zumindest weitgehend oder vollständig ausgefüllt wird, dessen Spaltraumöffnungsweite zwischen dem ersten Gehäuse (14.1) des ersten Glieds (12.1) und dem zweiten Gehäuse (14.2) des zweiten Glieds (12.2) größer als 5 Millimeter ist.

4. Roboterarm nach einem der Ansprüche 1 bis 3, wobei der Pufferkörper (15) ausgebildet ist, den veränderlichen Gelenkspalt (16), insbesondere den veränderlichen Gelenkspaltkeil (16a) oder den Spaltraum so weit auszufüllen, das eine Restspaltweite zwischen dem ersten Gehäuse (14.1) des ersten Glieds (12.1) und dem zweiten Gehäuse (14.2) des zweiten Glieds (12.2) von höchstens 5 Millimeter verbleibt.

5. Roboterarm nach einem der Ansprüche 1 bis 4, wobei der Pufferkörper (15) wenigstens einen starren Gerüstkörper (17) aufweist, der am Pufferkörper (15) relativ zum ersten Gehäuse (14.1) des ersten Glieds (12.1) und relativ zum zweiten Gehäuse (14.2) des zweiten Glieds (12.2) beweglich gelagert ist und mit wenigstens einem Federkörper (18) des Pufferkörpers (15) verbunden ist, der ausgebildet ist, den wenigstens einen starren Gerüstkörper (17) in einem von äußeren Kräften freien Zustand in eine Grundstellung zu positionieren.

6. Roboterarm nach einem der Ansprüche 1 bis 4, wobei der Pufferkörper (15) vollständig aus einem elastischen Formkörper besteht, der ausgebildet ist, aufgrund seiner immanenten Elastizität den Pufferkörper (15) in einem von äußeren Kräften freien Zustand in seine unverformte Grundgestalt zu bringen.

7. Roboterarm nach Anspruch 6, wobei der elastische Formkörper (15) ausgebildet ist, aufgrund seiner Kompression zwischen dem ersten Gehäuse (14.1) des ersten Glieds (12.1) und dem zweiten Gehäuse (14.2) des zweiten Glieds (12.2), im Vergleich zu seiner unverformten Grundgestalt sich aus dem Gelenkspalt (16), insbesondere aus dem Gelenkspaltkeil (16a) hervorzuwölben.

8. Roboterarm nach einem der Ansprüche 1 bis 7, wobei der Formkörper (15) in der durch die Relativbewegung von erstem Gehäuse (14.1) des ersten Glieds (12.1) zu dem zweiten Gehäuse (14.2) des zweiten Glieds (12.2) vorgegebenen Bewegungsrichtung eine geringere Steifigkeit und/oder höhere Elastizität aufweist, und in einer zur vorgegebenen Bewegungsrichtung quer verlaufenden Querrichtung eine höhere Steifigkeit und/oder geringere Elastizität aufweist.

9. Roboterarm nach einem der Ansprüche 1 bis 8, wobei das wenigstens eine erste Glied (12.1), das zweite Glied (12.2) und/oder der Formkörper (15) einen Sensor (20.1, 20.2, 20.3) aufweist, der ausgebildet ist, den zwischen dem ersten Gehäuse (14.1) des ersten Glieds (12.1) und dem zweiten Gehäuse (14.2) des zweiten Glieds (12.2) vorhandenen Gelenkspalt (16), insbesondere den Gelenkspaltkeil (16a) in seiner Spaltweite zu erfassen.

10. Roboterarm nach einem der Ansprüche 1 bis 9, wobei der Formkörper (15) mit einer Bewegungsvorrichtung ausgestattet ist, die ausgebildet ist, den Formkörper (15) aktiv aus seiner Grundgestalt in eine von der Grundgestalt abweichende Verformungsgestalt zu bewegen.

## Claims

1. Robot arm, having:
a plurality of members (12) and a plurality of joints (11), which connect the members (12) to one another in an articulated manner, wherein the members (12), in interaction with the joints (11), are designed to carry a load and to move said load in space, and the joints (11) can be automatically adjusted by means of motors in the robot arm (2) in order to move the members (12),
wherein, of the members (12), at least a first member (12.1) has a first housing (14.1) and a respectively adjacent second member (12.2) has a second housing (14.2), and the housings (14.1, 14.2) are designed to transmit forces and moments, which occur on account of the dead weight of the robot arm (2) and/or of the load, in each case to the adjacent member (12.1, 12.2),
and wherein the first housing (14.1) of the at least one first member (12.1) and/or the second housing (14.2) of the second member (12.2) have/has a deformation element (15a),
wherein the deformation element (15a) is designed to form a buffer body (15) in a joint gap (16), which can be varied on account of the associated joint (11) being adjusted, between the first housing (14.1) and the second housing (14.2), said buffer body at least substantially or completely filling the variable joint gap (16),
**characterized in that** the buffer body (15) is attached to the at least one first member (12.1) and, in the non-deformed basic shape thereof, is designed to maintain a minimum distance of 1 to 5 millimetres from the second member (12.2), or
**characterized in that** the buffer body (15) is attached to the second member (12.2) and, in the non-deformed basic shape thereof, is designed to maintain a minimum distance of 1 to 5 millimetres from the at least one first member (12.1).

2. Robot arm according to Claim 1, wherein the joint (11), which is associated with the at least one first member (12.1) and with the second member (12.2), is a rotary joint that is designed to move the first member (12.1) and the second member (12.2) relative to one another in a scissor-like movement, while forming a variable joint gap wedge (16a), wherein the variable joint gap wedge (16a), which is to be filled by the buffer body (15), is delimited by the first housing (14.1) of the first member (12.1) and the second housing (14.2) of the second member (12.2).

3. Robot arm according to Claim 1 or 2, wherein the variable joint gap (16), in particular the variable joint gap wedge (16a), is at least substantially or completely filled by the buffer body (15) over a gap area, which has a gap area opening width, between the first housing (14.1) of the first member (12.1) and the second housing (14.2) of the second member (12.2), of greater than 5 millimetres.

4. Robot arm according to any of Claims 1 to 3, wherein the buffer body (15) is designed to fill the variable joint gap (16), in particular the variable joint gap wedge (16a) or the gap area, to such an extent that a remaining gap width of at most 5 millimetres remains between the first housing (14.1) of the first member (12.1) and the second housing (14.2) of the second member (12.2).

5. Robot arm according to any of Claims 1 to 4, wherein the buffer body (15) has at least one rigid frame body (17), which is mounted on the buffer body (15) so as to be movable relative to the first housing (14.1) of the first member (12.1) and relative to the second housing (14.2) of the second member (12.2) and is connected to at least one spring body (18) of the buffer body (15), which is designed to position the at least one rigid frame body (17) in an initial position in a state in which it is free of external forces.

6. Robot arm according to any of Claims 1 to 4, wherein the buffer body (15) consists entirely of an elastic shaped body that is designed, on account of the inherent elasticity thereof, to bring the buffer body (15) into the non-deformed basic shape thereof in a state in which it is free of external forces.

7. Robot arm according to Claim 6, wherein the elastic shaped body (15), in contrast to the non-deformed basic shape thereof, is designed to bulge out of the joint gap (16), in particular out of the joint gap wedge (16a), as a result of being compressed between the first housing (14.1) of the first member (12.1) and the second housing (14.2) of the second member (12.2).

8. Robot arm according to any of Claims 1 to 7, wherein the shaped body (15) has a lower stiffness and/or higher elasticity in the direction of movement predefined by the movement of the first housing (14.1) of the first member (12.1) relative to the second housing (14.2) of the second member (12.2), and has a higher stiffness and/or lower elasticity in a transverse direction that runs perpendicular to the predefined direction of movement.

9. Robot arm according to any of Claims 1 to 8, wherein the at least one first member (12.1), the second member (12.2) and/or the shaped body (15) have/has a sensor (20.1, 20.2, 20.3) that is designed to detect the joint gap (16), in particular the gap width of the joint gap wedge (16a), between the first housing (14.1) of the first member (12.1) and the second housing (14.2) of the second member (12.2).

10. Robot arm according to any of Claims 1 to 9, wherein the shaped body (15) is equipped with a movement device that is designed to actively move the shaped body (15) out of the basic shape thereof into a deformation shape that differs from the basic shape.

## Revendications

1. Bras robotisé, présentant :
plusieurs membres (12) et plusieurs articulations (11), lesquelles relient les membres (12) les uns aux autres de manière articulée, dans lequel les membres (12) sont réalisés pour, en coopération avec les articulations (11), porter une charge et déplacer celle-ci dans l'espace, et les articulations (11) sont réglables automatiquement au moyen de moteurs du bras robotisé (2), afin de déplacer les membres (12),
dans lequel, parmi les membres (12), au moins un premier membre (12.1) présente un premier logement (14.1) et un deuxième membre (12.2) respectivement adjacent présente un deuxième logement (14.2), et les logements (14.1, 14.2) sont réalisés pour transmettre respectivement au membre adjacent (12.1, 12.2) des forces et des moments qui se produisent en raison du poids propre du bras robotisé (2) et/ou de la charge,
et dans lequel le premier logement (14.1) de l'au moins un premier membre (12.1) et/ou le deuxième logement (14.2) du deuxième membre (12.2) présente(nt) un élément de déformation (15a),
dans lequel l'élément de déformation (15a) est réalisé pour former un corps tampon (15) dans un interstice d'articulation (16), variable en raison d'un déplacement de l'articulation (11) associée, entre le premier logement (14.1) et le deuxième logement (14.2), lequel corps tampon remplit au moins dans une large mesure ou complètement l'interstice (16) variable,
**caractérisé en ce que** le corps tampon (15) est fixé à l'au moins un premier membre (12.1) et est réalisé pour, dans sa forme de base non déformée, maintenir une distance minimale de 1 à 5 millimètres par rapport au deuxième membre (12.2) ou
**caractérisé en ce que** le corps tampon (15) est fixé au deuxième membre (12.2) et est réalisé pour, dans sa forme de base non déformée, maintenir une distance minimale de 1 à 5 millimètres par rapport à au moins un premier membre (12.1).

2. Bras robotisé selon la revendication 1, dans lequel l'articulation (11) associée à l'au moins un premier membre (12.1) et au deuxième membre (12.2) est une articulation rotative qui est réalisée pour déplacer le premier membre (12.1) et le deuxième membre (12.2) l'un par rapport à l'autre dans un déplacement en ciseaux, en formant un coin d'interstice d'articulation (16a) variable, dans lequel le coin d'interstice d'articulation (16a) variable devant être rempli par le corps tampon (15) est limité par le premier logement (14.1) du premier membre (12.1) et le deuxième logement (14.2) du deuxième membre (12.2).

3. Bras robotisé selon la revendication 1 ou 2, dans lequel l'interstice d'articulation (16) variable, en particulier le coin d'interstice d'articulation (16a) variable est rempli par le corps tampon (15) au moins dans une large mesure ou complètement au-delà d'un espace d'interstice dont la largeur d'ouverture d'espace interstice entre le premier logement (14.1) du premier membre (12.1) et le deuxième logement (14.2) du deuxième membre (12.2) est supérieure à 5 millimètres.

4. Bras robotisé selon l'une des revendications 1 à 3, dans lequel le corps tampon (15) est réalisé pour remplir l'interstice d'articulation (16) variable, en particulier le coin d'interstice d'articulation (16a) variable ou l'espace d'interstice dans une mesure telle qu'une largeur restante d'interstice entre le premier logement (14.1) du premier membre (12.1) et le deuxième logement (14.2) du deuxième membre (12.2) d'au maximum 5 millimètres demeure.

5. Bras robotisé selon l'une des revendications 1 à 4, dans lequel le corps tampon (15) présente au moins un corps de cadre rigide (17) qui est monté mobile sur le corps tampon (15) par rapport au premier logement (14.1) du premier membre (12.1) et par rapport au deuxième logement (14.2) du deuxième membre (12.2) et est relié à au moins un corps de ressort (18) du corps tampon (15), qui est réalisé pour positionner l'au moins un corps de cadre rigide (17) dans une position de base dans un état dépourvu de forces externes.

6. Bras robotisé selon l'une des revendications 1 à 4, dans lequel le corps tampon (15) est constitué complètement d'un corps moulé élastique qui est réalisé pour, en raison de son élasticité inhérente, amener le corps tampon (15) dans sa forme de base non déformée dans un état dépourvu de forces externes.

7. Bras robotisé selon la revendication 6, dans lequel le corps moulé élastique (15) est réalisé pour, en raison de sa compression entre le premier logement (14.1) du premier membre (12.1) et le deuxième logement (14.2) du deuxième membre (12.2), se bomber hors de l'interstice d'articulation (16), en particulier hors du coin d'interstice d'articulation (16a), par comparaison avec sa forme de base non déformée.

8. Bras robotisé selon l'une des revendications 1 à 7, dans lequel le corps moulé (15) présente une plus petite rigidité et/ou une plus grande élasticité dans la direction de déplacement prédéfinie par le déplacement relatif du premier logement (14.1) du premier membre (12.1) par rapport au deuxième logement (14.2) du deuxième membre (12.2), et présente une plus grande rigidité et/ou une plus faible élasticité dans une direction transversale s'étendant transversalement à la direction de déplacement prédéfinie.

9. Bras robotisé selon l'une des revendications 1 à 8, dans lequel l'au moins un premier membre (12.1), le deuxième membre (12.2) et/ou le corps moulé (15) présente(nt) un capteur (20.1, 20.2, 20.3) qui est réalisé pour détecter l'interstice d'articulation (16) présent entre le premier logement (14.1) du premier membre (12.1) et le deuxième logement (14.2) du deuxième membre (12.2), en particulier le coin d'interstice d'articulation (16a) dans sa largeur d'interstice.

10. Bras robotisé selon l'une des revendications 1 à 9, dans lequel le corps moulé (15) est équipé d'un dispositif de déplacement qui est réalisé pour déplacer activement le corps moulé (15) de sa forme de base à une forme de déformation différant de la forme de base.
